# EUROPEAN PATENT APPLICATION

(11) **EP 4 456 218 A1**
(43) Date of publication of application: **30.10.2024**
(21) Application number: 24169861.2
(22) Date of filing: 12.04.2024
(51) Int. Cl.: H01M 10/02, H01M 10/04, H01M 10/0585, H01M 50/109, H01M 50/153, H01M 50/186, H01M 50/533, H01M 50/54

(54) **BUTTON CELL**

(30) Priority: 12.04.2023 KR 20230048344
(71) Applicant: Samsung SDI Co., Ltd., Yongin-si, Gyeonggi-do 17084 (KR)
(72) Inventor: Ryu, Myoung Han, 17084 Yongin-si, Gyeonggi-do (KR); Doo, Jaegyun, 17084 Yongin-si, Gyeonggi-do (KR)
(74) Representative: Gulde & Partner

(57) **Abstract**

A button cell includes a button-shaped electrode assembly including a plurality of first electrodes, a plurality of second electrodes, and a plurality of separators positioned between the plurality of first electrodes and the plurality of second electrodes, with the plurality of first electrodes, the plurality of second electrodes, and the plurality of separators being stacked in one direction. A first case and a second case are combined to house the electrode assembly; and a bonding portion insulating and bonds the first case and the second case. The electrode assembly further includes a plurality of first electrode tabs spaced apart from each other along a first part of a circular border of the electrode assembly, with each of the first electrode tabs extending from the plurality of first electrodes, each of the plurality of first electrode tabs extending to a center of a first surface of the electrode assembly, and the electrode tabs being connected to each other at the center of the first surface of the electrode assembly. A plurality of second electrode tabs are spaced apart from each other along a second part of the circular border of the electrode assembly from the plurality of second electrodes, extending to the center of the second surface of the electrode assembly, and connected to each other at the center of the second surface of the electrode assembly.

## Description

### BACKGROUND

### (a) Field

The present disclosure relates to a button cell.

### (b) Description of the Related Art

Generally, a rechargeable battery is a battery that may be repeatedly charged and discharged.

Recently, as demands on wearable devices such as headphones, earphones, smartwatches, and medical devices attachable to bodies using radio communication such as Bluetooth are increasing, the need for very small rechargeable batteries mounted on the wearable devices is increasing.

A conventional button cell includes an electrode assembly wound in a jelly-roll shape centered in a vertical direction and a case for accommodating the electrode assembly.

However, in conventional button cells, as the electrode assembly is wound in the form of the jelly roll, and a separate electrode tab is attached to the electrode of the electrode assembly, a volume ratio occupied by the electrode assembly in the entire button cell is reduced, resulting in a problem that the battery capacity deteriorates.

In addition, in conventional button cells, as the electrode assembly is wound in the form of the jelly roll, there is a problem in that the resistance of the electrode assembly is increased while simultaneously causing damage to the electrode assembly.

### SUMMARY OF THE DISCLOSURE

The present invention is set out in the appended set of claims, wherein the drawings and respective description relate to advantageous embodiments thereof.

An embodiment seeks to provide a button cell with improved battery performance by increasing battery capacity, preventing damage to the electrode assembly, and preventing an increase in resistance of the electrode assembly is prevented, thereby improving battery performance.

Additionally, it seeks to provide a button cell in which short circuits between electrode tabs with different polarities are prevented.

One aspect provides a button cell including a button-shaped electrode assembly including a plurality of first electrodes, a plurality of second electrodes, and a plurality of separators positioned between the plurality of first electrodes and the plurality of second electrodes, the plurality of first electrodes, the plurality of second electrodes, and the plurality of separators being stacked in one direction; a first case; a second case combined with the first case to house the electrode assembly; and a bonding portion insulating and bonding between the first case and the second case, wherein the electrode assembly further includes a plurality of first electrode tabs spaced apart from each other along a first part of a circular border of the electrode assembly from the plurality of first electrodes, each of the plurality of first electrode tabs extending to a center of a first surface of the electrode assembly, and the plurality of first electrode tabs being connected to each other at the center of the first surface of the electrode assembly; and a plurality of second electrode tabs spaced apart from each other along a second part of the circular border of the electrode assembly from the plurality of second electrodes, each of the plurality of second electrode tabs extending to the center of a second surface of the electrode assembly, and the plurality of second electrode tabs being connected to each other at the center of the second surface of the electrode assembly.

The electrode assembly may further include an insulating tape positioned at an end of electrode assembly of the one direction.

The insulating tape may support the plurality of first electrodes, the plurality of second electrodes, and the plurality of separators in the one direction.

The plurality of first electrode tabs include two bends between the plurality of first electrodes and the center of the first surface, and the plurality of first electrode tabs are spaced apart from each other and extend to the center of the first surface of the electrode assembly.

The plurality of first electrode tabs may overlap in the one direction at the center of the first surface of the electrode assembly.

The plurality of first electrode tabs may be in contact with the first case.

The length of the first electrode tab extending from the first electrode positioned at a top in the one direction among the plurality of first electrodes may be longer than the length of the first electrode tab extending from the first electrode positioned at a bottom in the one direction among the plurality of first electrodes.

The length of the plurality of first electrode tabs may become shorter sequentially from the top to the bottom in the one direction.

Each of the plurality of first electrode tabs may be integral with one of the plurality of first electrodes.

The plurality of second electrode tabs include two bends between the plurality of second electrodes and the center of the second surface, the plurality of second electrode tabs are spaced apart from each other and extend to the center of the second surface of the electrode assembly.

The plurality of second electrode tabs may overlap in the one direction at the center of the second surface of the electrode assembly.

The plurality of second electrode tabs may be in contact with the second case.

The length of the second electrode tab extending from the second electrode positioned at the bottom end in the one direction among the plurality of second electrodes may be longer compared to the length of the second electrode tab extended from the second electrode positioned at the top of the one direction among the plurality of second electrodes.

The length of the plurality of second electrode tabs may become shorter sequentially from the bottom to the top in the one direction.

Each of the plurality of second electrode tabs may be integral with one of the plurality of second electrodes.

According to an embodiment, a button cell with improved battery performance is provided by increasing the battery capacity, preventing damage to the electrode assembly, and simultaneously preventing increased resistance of the electrode assembly.

Additionally, a button cell is provided in which short circuiting between electrode tabs with different polarities is prevented.

Another aspect provides battery including an electrode assembly including a plurality of first electrodes, a plurality of second electrodes, and a plurality of separators positioned between the plurality of first electrodes and the plurality of second electrodes, the plurality of first electrodes, the plurality of second electrodes, and the plurality of separators being stacked in one direction; wherein the electrode assembly further includes a plurality of first electrode tabs spaced apart from each other along a first part of a circular border of the electrode assembly, each of the first electrode tabs extending from one of the first electrodes, each of the plurality of first electrode tabs extending to a center of a first surface of the electrode assembly, and the electrode tabs being connected to each other at the center of the first surface of the electrode assembly; and a plurality of second electrode tabs spaced apart from each other along a second part of the circular border of the electrode assembly, each of the second electrode tabs extending from one of the of second electrodes, extending to a center of a second surface of the electrode assembly, and the second electrode tabs being connected to each other at the center of the second surface of the electrode assembly.

### BRIEF DESCRIPTION OF THE DRAWINGS

FIG. 1 is a perspective view showing a button cell according to an embodiment.
FIG. 2 is an exploded perspective view of a button cell according to an embodiment.
FIG. 3 is a cross-sectional view taken along a line III-III of FIG. 1.
FIG. 4 is a perspective view showing a first surface side of an electrode assembly of a button cell according to an embodiment.
FIG. 5 contains perspective views showing that first electrode tabs and second electrode tabs of an electrode assembly of a button cell according to an embodiment are bent twice.
FIG. 6 is a perspective view showing a second surface side of an electrode assembly of a second button cell according to an embodiment.

### DETAILED DESCRIPTION OF THE EMBODIMENTS

Hereinafter, embodiments of the present disclosure will be described in detail with reference to the accompanying drawings so that those with ordinary skill in the art to which the present disclosure pertains may easily carry out the embodiments.

In addition, unless explicitly described to the contrary, the word "comprise," and variations such as "comprises" or "comprising," should be understood to imply the inclusion of stated elements but not the exclusion of any other elements.

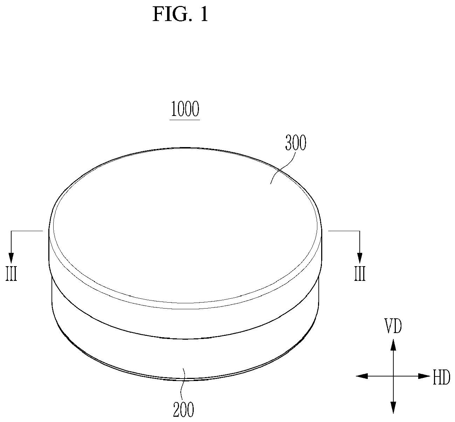

Hereinafter, a button cell according to an embodiment is described with reference to FIG. 1 to FIG. 6.

A button cell according to an embodiment is an ultra-small rechargeable battery and may include a coin cell, but is not limited thereto and may include a cylindrical or pin-type battery.

Here, a button cell is a thin coin- or button-shaped battery, and may refer to a battery with a ratio of a height to a diameter (a height/diameter ratio) of 1 or less, but is not limited thereto. Since the button cells are mainly cylindrical, the cross-section in the horizontal direction is circular, but it is not limited to this, and the cross-section in the horizontal direction may be elliptical or polygonal. The diameter may mean the maximum distance based on the horizontal direction of the button cell, and the height may mean the maximum distance (the distance from the flat bottom surface to the flat top surface) based on the vertical direction of the button cell.

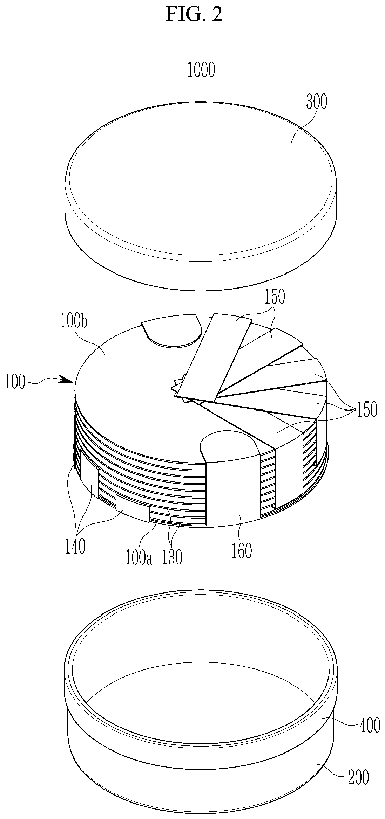

FIG. 1 is a perspective view showing a button cell according to an embodiment. FIG. 2 is an exploded perspective view of a button cell according to an embodiment.

Referring to FIG. 1 and FIG. 2, a button cell 1000 according to an embodiment is a rechargeable battery that can be repeatedly charged and discharged, and the button cell 1000 includes an electrode assembly 100, a first case 200, a second case 300, and a bonding portion 400.

The electrode assembly 100 is accommodated in the first case 200. A first surface 100a of the electrode assembly 100 faces the first case 200, and a second surface 100b of the electrode assembly 100 faces the second case 300, which is combined with the first case 200 to cover the electrode assembly 100. In one embodiment, a second case 300 may be combined with the first case 200 to house the electrode assembly 100. The first surface 100a and the second surface 100b of the electrode assembly 100 may have planar shapes parallel to each other, but are not limited thereto.

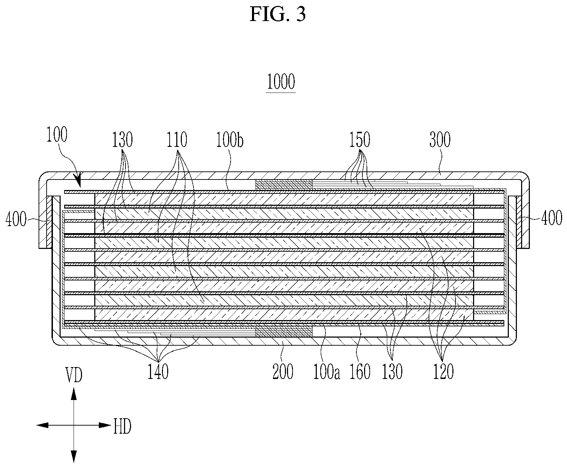

FIG. 3 is a cross-sectional view taken along a line III-III of FIG. 1.

Referring to FIG. 2 and FIG. 3, the electrode assembly 100 includes a plurality of first electrodes 110, a plurality of second electrodes 120, a plurality of separators 130, a plurality of first electrode tabs 140, a plurality of second electrode tabs 150, and an insulating tape 160. Hereinafter, one direction includes a vertical direction VD, and the other direction includes a horizontal direction HD that intersects the vertical direction VD.

The plurality of first electrodes 110 and the plurality of second electrodes 120 are stacked in the vertical direction VD and are spaced apart from each other. Between the plurality of first electrodes 110 and the plurality of second electrodes 120, a plurality of separators 130 including an insulating material are positioned. The plurality of first electrodes 110, the plurality of second electrodes 120, and the plurality of separators 130 have a disc shape and may be stacked in the vertical direction VD to form a button shape.

The first electrode 110 may be an anode, and the second electrode 120 may be a cathode; however the present disclosure is not limited thereto, and the first electrode 110 may be a cathode, and the second electrode 120 may be an anode.

The plurality of first electrodes 110 has a disk shape extending in the other direction, the horizontal direction HD crossing one direction, the vertical direction VD. Each of the first electrodes 110 includes an anode coated region of an area where an anode active material layer is coated to a current collector of a metal foil (for example, a Cu foil), and an anode uncoated region of an area where an active material is not applied. The anode uncoated region may be positioned at ends of the first electrodes 110 to which the first electrode tabs 140 are connected.

The second electrodes 120 are separated from the first electrodes 110 in the vertical direction VD via the separator 130 in between, and the plurality of second electrodes 120 has a disk shape extending in the horizontal direction HD. Each of the second electrodes 120 includes a cathode coated region, which is an area where a cathode active material layer is applied to a current collector of a metal foil (for example, an Al foil), and a cathode uncoated region, which is an area where the active material is not applied. The cathode uncoated region may be positioned at ends of the second electrodes 120 to which the second electrode tabs 150 are connected.

The separators 130 extends in the horizontal direction HD between the first electrode 110 and the second electrode 120 to prevent short circuiting between the first electrodes 110 and the second electrode 120.

The plurality of first electrodes 110, the plurality of separators 130, and the plurality of second electrodes 120 form a button shape as each the first electrode 110, each the separator 130, and each the second electrode 120 are stacked sequentially in the vertical direction VD. Here, the vertical direction VD includes a thickness direction or a height direction of the button cell 1000, but is not limited thereto,

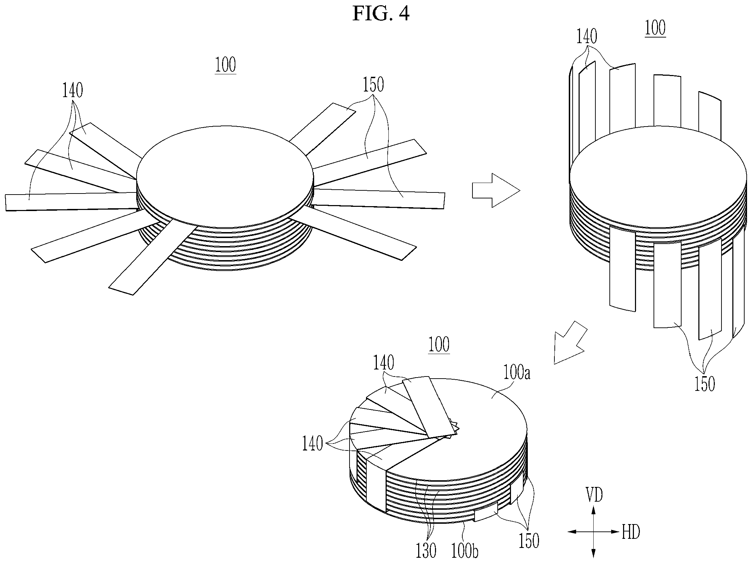

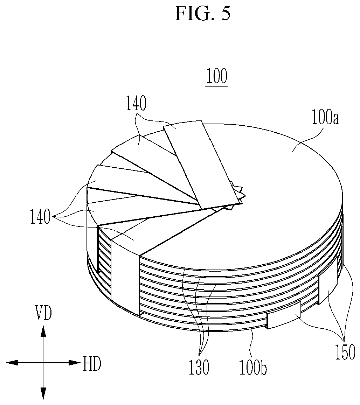

FIG. 4 are perspective views showing a first surface side of an electrode assembly of a button cell according to an embodiment. In FIG. 4, an insulating tape of the electrode assembly is not shown. FIG. 5 is a perspective view showing that the first electrode tabs and the second electrode tabs of an electrode assembly of a button cell according to an embodiment are bent twice.

Referring to FIG. 4 and FIG. 5 along with FIG. 3, the plurality of first electrode tabs 140 are spaced apart from each other along one part of a circular border of the electrode assembly 100 from the plurality of first electrodes 110 of the electrode assembly 100 and extend to the central area of the first surface 100a of the electrode assembly 100. The ends of the plurality of first electrode tabs 140 are stacked in the vertical direction VD in the central area of the first surface 100a of the electrode assembly 100 and connected to each other. The plurality of first electrode tabs 140 may be spaced apart from each other in the horizontal direction HD along one circular border of the electrode assembly 100 from each of the plurality of first electrodes 110 and may extend to the central area of the first surface 100a of the electrode assembly 100. The plurality of first electrode tabs 140 are bent twice between the plurality of first electrodes 110 and the center area of the first surface 100a while spaced apart from each other and extending to the center of the first surface 100a of the electrode assembly 100. Specifically, each of the plurality of first electrode tabs 140 extends in the horizontal direction HD from one of the plurality of first electrodes 110 while being spaced apart from the other first electrode tabs 140 along one part of the circular border of the electrode assembly 100 in the horizontal direction HD, is first bent and extends from the circular border of the electrode assembly 100 in the vertical direction VD, is second bent and extends from the end of the first surface 100a of the electrode assembly 100 to the center of the first surface 100a, and extends to the center of the first surface 100a of the electrode assembly 100. In one embodiment, the plurality of first electrode tabs 140 may overlap in the one direction at the center of the first surface 100a of the electrode assembly 100. The ends of the plurality of first electrode tabs 140 overlap in the vertical direction VD at the center of the first surface 100a of the electrode assembly 100 and are in contact with the first case 200. The plurality of first electrode tabs 140 extend from the plurality of first electrodes 110 and is in contact with the first case 200, so that the first case 200 has the same polarity as the first electrode 110. In one embodiment, the plurality of first electrode tabs 140 may be in contact with the first case 200. As the plurality of first electrode tabs 140 are in contact with the first case 200, the external surface of the first case 200 may be the first electrode terminal of the button cell 1000.

The length of the first electrode tab 140 extending from the first electrode 110 positioned at the top in the vertical direction VD among the plurality of first electrode tabs 140 is greater than the first electrode tab 140 extending from the first electrode 110 positioned at the bottom of the electrode assembly 100 in the vertical direction VD among the plurality of first electrodes 110. The lengths of the plurality of first electrode tabs 140 decreases sequentially from the top of the electrode assembly 100 to the bottom of the electrode assembly 100 in the vertical direction VD, and as a result, the ends of the plurality of first electrode tabs 140 connected to the plurality of first electrodes 110 stacked in the vertical direction VD do not deviate from the center of the first surface 100a of the electrode assembly 100 and are stacked in the vertical direction VD at the center of the first surface 100a of the electrode assembly 100. Here, among the plurality of first electrodes 110, the first electrode 110 positioned at the top in the vertical direction VD is positioned closer to the second case 300 in the vertical direction VD than the first electrode 110 positioned at the bottom.

Each of the plurality of first electrode tabs 140 may be integrated with one of the plurality of first electrodes 110. In one embodiment, each of the first electrode tabs 140 may be integral with one of the first electrodes 110. As the plurality of first electrode tabs 140 extend integrally from the plurality of first electrodes 110 stacked in the vertical direction VD, no process or space is required to attach the plurality of first electrode tabs 140 to the plurality of first electrodes 110, and a volume ratio occupied by the electrode assembly 100 in the entire button cell 1000 is improved, thereby increasing battery capacity.

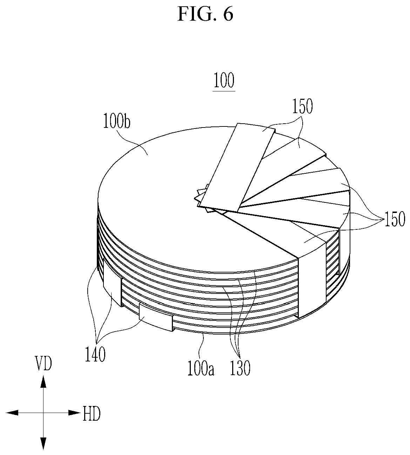

FIG. 6 is a perspective view showing a second surface side of an electrode assembly of a button cell according to an embodiment. In FIG. 6, the insulating tape of the electrode assembly is not shown.

Referring to FIG. 6 and FIG. 3, the plurality of second electrode tabs 150 are spaced apart from the plurality of first electrode tabs 140 across the center in the horizontal direction HD of the electrode assembly 100. The plurality of second electrode tabs 150 are spaced apart from each other along a part of the circular border of the electrode assembly 100 from the plurality of second electrodes 120 of the electrode assembly 100 and the second electrode tabs 150 extend to the central area of the second surface 100b of the electrode assembly 100. Here, the second part of the circular border of the electrode assembly 100 where the second electrode tabs 150 are positioned is a portion spaced apart from the first part of the circular border of the electrode assembly 100 where the first electrode tabs 140 are positioned via the center in the horizontal direction HD of the electrode assembly 100 in between, but is not limited thereto. The ends of the plurality of second electrode tabs 150 are stacked in the vertical direction VD in the central area of the second surface 100b of the electrode assembly 100 and connected to each other. The plurality of second electrode tabs 150 are spaced apart from each other in the horizontal direction HD along the second part of the circular border of the electrode assembly 100 from each of the plurality of second electrodes 120 and extend to the central area of the second surface 100b of the electrode assembly 100. The plurality of second electrode tabs 150 are bent twice between the plurality of second electrodes 120 and the center of the second surface 100b of the electrode assembly 100. Specifically, each of the plurality of second electrode tabs 150 extends in the horizontal direction HD from each of the plurality of second electrode tabs 150 in the horizontal direction HD while being spaced apart from each other along the second part of the circular borders of the electrode assembly 100, extends through a first bent in the vertical direction VD from the second part of the circular border of the electrode assembly 100, extends through a second bend and extends from the end of the second surface 100b of the electrode assembly 100 to the center of the second surface 100b, and extends in the center of the second surface 100b of the electrode assembly 100. The ends of the plurality of second electrode tabs 150 overlap in the vertical direction VD at the center of the second surface 100b of the electrode assembly 100 and are in contact with the second case 300. In an embodiment, the plurality of second electrode tabs 150 may overlap in the one direction at the center of the second surface 100b of the electrode assembly 100. The plurality of second electrode tabs 150 extend from the plurality of second electrodes 120 and are in contact with the second case 300, so that the second case 300 has the same polarity as the second electrode 120. As the plurality of second electrode tabs 150 are in contact with the second case 300, the external surface of the second case 300 may be the second electrode terminal of the button cell 1000.

As the plurality of second electrode tabs 150 are spaced apart from each other along the circular border of the electrode assembly 100 and extend to the center of the second surface 100b of the electrode assembly 100, and the plurality of first electrode tabs 140 are spaced apart from each other along the circular border of the electrode assembly 100 and extend to the center of the first surface 100a of the electrode assembly 100, short circuiting between the plurality of first electrode tabs 140 and the plurality of second electrode tabs 150 is prevented.

The length of the second electrode tab 150 extending from the second electrode 120 positioned at the bottom in the vertical direction VD among the plurality of second electrode tabs 150 is greater than the length of the second electrode tab 150 extending from the second electrode 120 positioned at the top in the vertical direction VD among the plurality of second electrodes 120. In an embodiment, the length of the second electrode tab 150 extending from the second electrode 120 positioned at a bottom of the electrode assembly 100 in the one direction among the plurality of second electrodes 120 may be longer than the length of the second electrode tab 150 extending from the second electrode 120 positioned at a top of the electrode assembly 100 in the one direction among the plurality of second electrodes 120. The lengths of the plurality of second electrode tabs 150 decreases sequentially from the bottom of the electrode assembly 100 in to the top of the electrode assembly 100 in the vertical direction VD.As a result, the ends of the plurality of second electrode tabs 150 connected to the plurality of second electrodes 120 stacked in the vertical direction VD do not deviate from the center of the second surface 100b of the electrode assembly 100 and are stacked in the vertical direction VD at the center of the second surface 100b of the electrode assembly 100. Here, among the plurality of second electrodes 120, the second electrode 120 positioned at the bottom in the vertical direction VD is positioned closer to the first case 200 in the vertical direction VD than the second electrode 120 positioned at the top.

Each of the plurality of second electrode tabs 150 may be integrated with one of the plurality of second electrodes 120. Since the plurality of second electrode tabs 150 extend integrally from the plurality of second electrodes 120 stacked in the vertical direction VD, no process or space is required to attach the plurality of second electrode tabs 150 to the plurality of second electrodes 120, the volume ratio occupied by the electrode assembly 100 in the entire button cell 1000 is improved, thereby increasing battery capacity.

Referring to FIG. 2 and FIG. 3, an insulating tape 160 is positioned at the end of the electrode assembly 100 in the vertical direction VD. The insulating tape 160 may be positioned at the bottom in the vertical direction VD of the electrode assembly 100, but the insulating tape 160 is not limited to this and may be positioned at the top in the vertical direction VD of the electrode assembly 100. In one embodiment, the insulating tape 160 may be positioned at an end of the button cell 1000 in the one direction. Here, the bottom in the vertical direction VD of the electrode assembly 100 is the part closer to the first case 200 in the vertical direction VD than the top, and the top in the vertical direction VD of the electrode assembly 100 is closer to the second case 300 in the vertical direction VD than the bottom. In another embodiment, one insulating tape 160 may be positioned on the bottom in the vertical direction VD of the electrode assembly 100, and the other insulating tape may be positioned on the top in the vertical direction VD of the electrode assembly 100. The insulating tape 160 supports the plurality of first electrodes 110, the plurality of second electrodes 120, and the plurality of separators 130 in the vertical direction VD.

The first case 200 is connected to the plurality of first electrodes 110 of the electrode assembly 100 by the plurality of first electrode tabs 140 and accommodates the electrode assembly 100. The first case 200 includes an opening exposing the second surface 100b of the electrode assembly 100 and a side forming the opening. The bottom of the first case 200 is in contact with the plurality of first electrode tabs 140 and is connected to the plurality of first electrodes 110 of the electrode assembly 100, so that the first case 200 has the same polarity as the first electrode 110. The first case 200 has a button-shape that accommodates the electrode assembly 100, but is not limited to this shape and may have various known shapes. The first case 200 can accommodate various known electrolyte solutions together with the electrode assembly 100. The rear surface of the first case 200, which is the external surface of the first case 200, may be the first electrode terminal of the button cell 1000, but is not limited to this. The front surface, which is the external surface of the second case 300, may be the second electrode terminal of the button cell 1000, but is not limited to this. A plating layer may be coated on the external surface of the first case 200, but the present disclosure is not limited to this and various known coating layers may be coated on the external surface of the first case 200. Various known insulating means may be positioned on the inner surface of the side surface of the first case 200 to prevent a short circuit between the plurality of first electrode tabs 140 and the plurality of second electrode tabs 150. The first case 200 may be formed of stainless steel, but is not limited thereto and may include various known metals. The opening of the first case 200 is completely covered by the second case 300.

The second case 300 is connected to the plurality of second electrodes 120 by the plurality of second electrode tabs 150. The second case 300 is combined with the first case 200 by the bonding portion 400. The second case 300 completely covers the opening of the first case 200 in the vertical direction VD and accommodates the electrode assembly 100 together with the first case 200. The second case 300 firmly seals the electrode assembly 100 together with the first case 200 and the bonding portion 400. The second case 300 is connected to the plurality of second electrodes 120 of the electrode assembly 100, and has the same polarity as the second electrodes 120. The front surface of the second case 300 may be the second electrode terminal of the button cell 1000. A plating layer may be coated on the external surface of the second case 300, but is not limited to this, and various known coating layers may be coated on the external surface of the second case 300. The second case 300 may be formed from aluminum, but is not limited thereto, and may be formed from various known metals.

The bonding portion 400 is positioned between the side surface of the first case 200 and the side surface of the second case 300, but is not limited to this. The bonding portion 400 insulates and bonds the first case 200 and the second case 300. The second case 300 is coupled to the first case 200 by the bonding portion 400. The bonding portion 400 has a loop shape on a plane along the side surface of the first case 200, but is not limited to this. The bonding portion 400 prevents short circuiting between the first case 200, which is the first electrode terminal, and the second case 300, which is the second electrode terminal. As the bonding portion 400 bonds the second case 300 and the first case 200, the internal space between the first case 200 in which the electrode assembly 100 is stored and the second case 300 is completely sealed by the bonding portion 400. The bonding portion 400 includes polypropylene and polyimide, but is not limited thereto, and may include various known resins for insulating bonding between the second case 300 and the first case 200. For example, the bonding portion 400 may include a thermosetting resin and a thermoplastic resin. The thermosetting resin of the bonding portion 400 may include various known thermosetting resins such as phenol resin, urea resin, melamine resin, epoxy resin, and polyester resin. The thermoplastic resin of the bonding portion 400 may include polypropylene resin, but is not limited thereto, and may include various known thermoplastic resins such as polystyrene, polyethylene, and polyvinyl chloride resin.

A battery 10 according to the present invention comprises an electrode assembly 100 including a plurality of first electrodes 110, a plurality of second electrodes 120, and a plurality of separators 130 positioned between the plurality of first electrodes 110 and the plurality of second electrodes 120, the plurality of first electrodes 110, the plurality of second electrodes 120, and the plurality of separators 130 are stacked in one direction. The electrode assembly 100 of the battery 10 further includes a plurality of first electrode tabs 140 spaced apart from each other along a first part of a circular border of the electrode assembly 100, each of the first electrode tabs 140 extend from one of the first electrodes 110, each of the plurality of first electrode tabs 140 extend to a center of a first surface 100a of the electrode assembly 100, and the first electrode tabs 140 are connected to each other at the center of the first surface 100a of the electrode assembly 100. The electrode assembly 100 of the battery 10 further includes a plurality of second electrode tabs 150 spaced apart from each other along a second part of the circular border of the electrode assembly 100, each of the second electrode tabs 150 extend from one of the of second electrodes 120, extending to a center of a second surface 100b of the electrode assembly 100, and the second electrode tabs 150 are connected to each other at the center of the second surface 100b of the electrode assembly 100.

As described above, in the button cell 1000 according to an embodiment, the plurality of first electrode tabs 140 are spaced apart from each other along one part of the circular border of the electrode assembly 100 and extend to the center of the first surface 100a of the electrode assembly 100, and the plurality of second electrode tabs 150 are spaced apart from each other along a second part of the circular border of the electrode assembly 100 and extend to the center of the second surface 100b of the electrode assembly 100, whereby short circuiting between the plurality of first electrode tabs 140 and the plurality of second electrode tabs 150, which have different polarities, is prevented.

In addition, in the button cell 1000 according to an embodiment, as the plurality of first electrode tabs 140 extend integrally from the plurality of first electrodes 110 stacked in the vertical direction VD, and the plurality of second electrode tabs 150 extend integrally from the plurality of second electrodes 120 stacked in the vertical direction VD, and since no process or space is required to attach the plurality of first electrode tabs 140 to the plurality of first electrodes 110 and the plurality of second electrode tabs 150 to the plurality of second electrodes 120, the volume ratio occupied by the electrode assembly 100 in the entire button cell 1000 is improved, thereby increasing battery capacity.

In addition, in the button cell 1000 according to an embodiment, as the electrode assembly 100 stored inside the first case 200 and the second case 300 is not wound in a jelly-roll shape, and the plurality of first electrodes 110, the plurality of separators 130, and the plurality of second electrodes 120 included in the electrode assembly 100 are stacked to form the button shape, compared to other electrode assemblies in the jelly-roll form, damage to the electrode assembly 100 is prevented and simultaneously increased resistance of electrode assembly 100 is prevented.

In other words, the button cell 1000 is provided with improved battery performance by increasing battery capacity, preventing damage to the electrode assembly 100, and simultaneously preventing increased resistance in the electrode assembly 100.

In addition, the button cell 1000 is provided in which short circuiting is prevented between the plurality of first electrode tabs 140 and the plurality of second electrode tabs 150, which are electrode tabs having different polarities.

### <Description of symbols>

electrode assembly 100, first electrode 110, second electrode 120, separator 130, first electrode tab 140, second electrode tab 150, first case 200, second case 300, bonding portion 400

## Claims

1. A button cell (1000) comprising:
an electrode assembly (100) including a plurality of first electrodes (110), a plurality of second electrodes (120), and a plurality of separators (130) positioned between the plurality of first electrodes (110) and the plurality of second electrodes (120), the plurality of first electrodes (110), the plurality of second electrodes (120), and the plurality of separators (130) being stacked in one direction;
a first case(200);
a second case (300) combined with the first case (200) to house the electrode assembly (100); and
a bonding portion (400) insulating and bonding the first case (200) and the second case (300),
wherein the electrode assembly (100) further includes
a plurality of first electrode tabs (140) spaced apart from each other along a first part of a circular border of the electrode assembly (100), each of the first electrode tabs (140) extending from one of the first electrodes (110), each of the plurality of first electrode tabs (140) extending to a center of a first surface (100a) of the electrode assembly (100), and the first electrode tabs (140) being connected to each other at the center of the first surface (100a) of the electrode assembly (100); and
a plurality of second electrode tabs (150) spaced apart from each other along a second part of the circular border of the electrode assembly (100), each of the second electrode tabs (150) extending from one of the second electrodes (120), extending to a center of a second surface (100b) of the electrode assembly (100), and the second electrode tabs (150) being connected to each other at the center of the second surface (100b) of the electrode assembly (100).

2. The button cell (1000) as claimed in claim 1, wherein:
the electrode assembly (100) further comprises an insulating tape (160) positioned at an end of the button cell (1000) in the one direction.

3. The button cell (1000) as claimed in claim 1 or 2, wherein:
the insulating tape (160) supports the plurality of first electrodes (110), the plurality of second electrodes (120), and the plurality of separators (130) in the one direction.

4. The button cell (1000) as claimed in any of claims 1 to 3, wherein:
the plurality of first electrode tabs (140) are bent twice between the plurality of first electrodes (110) and the center of the first surface (100a) of the electrode assembly (100).

5. The button cell (1000) as claimed in claim 4, wherein:
the plurality of first electrode tabs (140) overlap in the one direction at the center of the first surface (100a) of the electrode assembly (100).

6. The button cell (1000) as claimed in any of claims 1 to 5, wherein:
the length of the first electrode tab (140) extending from the first electrode (110) positioned at a top of the one direction among the plurality of first electrodes (110) is greater than the length of the first electrode tab (140) extending from the first electrode (110) positioned at a bottom of the electrode assembly (100) in the one direction among the plurality of first electrodes (110).

7. The button cell (1000) as claimed in any of claims 1 to 6, wherein:
the lengths of the plurality of first electrode tabs (140) decreases sequentially from a top of the electrode assembly (100) to a bottom of the electrode assembly (100) in the one direction.

8. The button cell (1000) as claimed in any of claims 1 to 7, wherein:
each of the first electrode tabs (140) is integral with one of the first electrodes (110).

9. The button cell (1000) as claimed in any of claims 1 to 8, wherein:
each of the second electrode tabs (150) are bent twice between the plurality of second electrodes (120) and the center of the second surface (100b) of the electrode assembly (100).

10. The button cell (1000) as claimed in claim 9, wherein:
the plurality of second electrode tabs (150) overlap in the one direction at the center of the second surface (100b) of the electrode assembly (100).

11. The button cell (1000) as claimed in any of claims 1 to 10, wherein:
the plurality of second electrode tabs (150) are in contact with the second case (300).

12. The button cell (1000) as claimed in any of claims 1 to 11, wherein:
the length of the second electrode tab (150) extending from the second electrode (120) positioned at a bottom of the electrode assembly (100) in the one direction among the plurality of second electrodes (120) is longer than the length of the second electrode tab (150) extended from the second electrode (120) positioned at a top of the electrode assembly (100) in the one direction among the plurality of second electrodes (120).

13. The button cell (1000) as claimed in any of claims 1 to 12, wherein:
the lengths of the plurality of second electrode tabs (150) decreases sequentially from a bottom of the electrode assembly (100) in to a top of the electrode assembly (100) in the one direction.

14. The button cell (1000) as claimed in any of claims 1 to 13, wherein:
each of the plurality of second electrode tabs (150) is integral with one of the plurality of second electrodes (120).

15. A battery (10) comprising:
an electrode assembly (100) including a plurality of first electrodes (110), a plurality of second electrodes (120), and a plurality of separators (130) positioned between the plurality of first electrodes (110) and the plurality of second electrodes (120), the plurality of first electrodes (110), the plurality of second electrodes (120), and the plurality of separators (130) being stacked in one direction;
wherein the electrode assembly (100) further includes:
a plurality of first electrode tabs (140) spaced apart from each other along a first part of a circular border of the electrode assembly (100), each of the first electrode tabs (140) extending from one of the first electrodes (110), each of the plurality of first electrode tabs (140) extending to a center of a first surface (100a) of the electrode assembly (100), and the first electrode tabs (140) being connected to each other at the center of the first surface (100a) of the electrode assembly (100); and
a plurality of second electrode tabs (150) spaced apart from each other along a second part of the circular border of the electrode assembly (100), each of the second electrode tabs (150) extending from one of the of second electrodes (120), extending to a center of a second surface (100b) of the electrode assembly (100), and the second electrode tabs (150) being connected to each other at the center of the second surface (100b) of the electrode assembly (100).
